# EUROPÄISCHE PATENTANMELDUNG

(11) **EP 0 943 243 A1**
(43) Veröffentlichungstag der Anmeldung: **22.09.1999**
(21) Anmeldenummer: 99105602.9
(22) Anmeldetag: 19.03.1999
(51) Int. Cl.: A23C 3/033, A23L 3/005

(54) **Verfahren und Vorrichtung zur kontinuierlichen Sterilisation eines fliessfähigen Produktes**

(30) Priorität: 19.03.1998 DE 19812039; 01.07.1998 DE 19829359
(71) Anmelder: SIG Combibloc GmbH, 52441 Linnich (DE)
(72) Erfinder: Friedrich, Peter Dr., 52441 Linnich (DE); Trautwein, Werner, 52511 Geilenkirchen (DE)
(74) Vertreter: Thielmann, Andreas

(57) **Zusammenfassung**

Dargestellt und beschrieben sind ein Verfahren und eine Vorrichtung zur kontinuierlichen Sterilisation eines fließfähigen Produktes, insbesondere Milchproduktes. Zur Sterilisation thermisch sensibler Produkte mit oder ohne Stückanteil mit einer minimalen chemischen Veränderung und ohne daß die Produkte geschädigt werden oder sich sonst unsgünstig verändern, weist das Verfahren die folgenden Schritte auf:
- induktive Erwärmung (Sterilisation) auf eine Sterilisationstemperatur von 121°C ≤ Tₛ ≤ 160°C und
- Abkühlung auf Verarbeitungs- bzw. Fülltemperatur.

Auf diese Weise ist es möglich, bei Anlagen mit Leistungen von 10.000 l/h das Anlagevolumen des induktiven Erwärmungsbereichs auf unter 150 l zu reduzieren.

## Beschreibung

Die Erfindung betrifft ein Verfahren zur kontinuierlichen Sterilisation eines fließfähigen Produktes mit oder ohne stückigen Anteilen, insbesondere Milchproduktes, und eine dazu geeignete Vorrichtung.

Es gehört heute zum Stand der Technik, fließfähige Produkte mit einem pH-Wert > 4,5 direkt oder indirekt mit Temperaturen zwischen 121°C und 150°C zu sterilisieren. Die indirekte Erhitzung ist durch die verschiedensten Gesetzmäßigkeiten limitiert bzw. aus ernährungsphysiologischer Sicht sind Temperaturen > 140°C nicht angezeigt. Dabei weist die Direkterhitzung z.B. von Milchprodukten gegenüber der indirekten Erhitzung erhebliche Qualitätsvorteile auf.

So ist es aus der EP 0 617 897 B1 bereits bekannt, daß Milch oder milchhaltige Produkte durch Direktdampfinjektion sehr schnell auf die erforderliche Sterilisationstemperatur erhitzt werden. Entsprechende Sterilisationsverfahren (UHT [ultra high temperature]-Verfahren] sind daher als Sterilisationsverfahren die Regel.

Aus der WO 97/32483 ist es bekannt, ein flüssiges Produkt mittels Mikrowellenerhitzung zu entkeimen. Die Verwendung von Mikrowellen ist jedoch nachteilig, da die Mikrowellenerhitzung von der Eindringtiefe abhängig ist.

Da die Mikrowellenstrahlung nur etwa 25 mm in das Produkt eindringt und ihre Wirkung dabei stark abnimmt, muß eine entsprechende Anlage mit dünnen Schichten bzw. großen Längen arbeiten, was einerseits zu einer großen Baugröße der Anlage führt und andererseits einen großen Energieeinsatz durch die Verwendung großflächiger Mikrowellenstrahler bedingt. Auf das Problem der produktschonenden Erhitzung wird bei diesem bekannten Verfahren nicht eingegangen.

Trotz aller Bemühungen, diese bekannten Verfahren durch geschickte Temperaturführungen und Verfahrenstechnologien hinsichtlich einer zu vermeidenden Produktschädigung zu optimieren, ergeben sich dabei die folgenden Nachteile:
- aufgrund physikalisch-chemischer Gesetzmäßigkeiten finden in allen Produkten mehr oder weniger starke chemische Veränderungen statt. Diese sind um so größer, je länger die Einwirkzeit der Erhitzungstemperatur dauert. Aus diesem Grunde dürfen Sterilisationstemperaturen von > 140°C nur sehr kurzzeitig auf beispielsweise Milchprodukte einwirken, damit z. B. der Lactulose-Wert oder die Proteine ein tolerierbares Maß nicht übersteigen. Überdies führen lange Behandlungszeiten bei hohen Temperaturen zu Vitaminschädigungen und zu Bräunungsreaktionen des Produktes.
- Die Direktdampfinjektion/-infusion hat weiterhin den Nachteil, daß die Produkte anschließend unter sterilen Bedingungen homogenisiert und durch Evakuierung die Brüden herausgezogen werden müssen (Flash-Kühlung). Diese Vorgehensweise birgt aseptische Risiken in sich und ist durch geringen Wärmerückgewinn und hohe Materialkosten sehr teuer.
- Schließlich läßt sich die Direktdampfinjektion/ -infusion mit anschließender Flash-Kühlung bei Stücke enthaltenden Produkten nur bedingt einsetzen, da eine Produktzerstörung unvermeidlich ist.

Zu einem sicheren Sterilisieren, d.h. auch zum Abtöten der sog. "hitzeresistenten Sporenbildner" müssen jedoch die vorbeschriebenen Nachteile in Kauf genommen werden, um eine zuverlässige Sterilisation zu gewährleisten.

Der Erfindung liegt daher die Aufgabe zugrunde, ein Verfahren zur kontinuierlichen Sterilisation eines fließfähigen Produktes anzugeben, daß die Sterilisation thermisch sensibler Produkte mit oder ohne Stückanteil mit einer minimalen chemischen Veränderung erlaubt, ohne daß die Produkte geschädigt werden (anbrennen) oder sich sonst ungünstig verändern. Insbesondere soll eine starke Verfärbung des Produktes vermieden werden.

Diese Aufgabe ist bei dem eingangs genannten und zuvor näher erläuterten Verfahren zu kontinuierlichen Sterilisation eines fließfähigen Produktes durch die folgenden Schritte gekennzeichnet:
- induktive Erwärmung (Sterilisation) auf eine Sterilisationstemperatur von 121°C ≤ T_{S} ≤ 160°C und
- Abkühlung auf Verarbeitungs- bzw. Fülltemperatur.

Die mit dem erfindungsgemäßen Verfahren sterilisierten Produkte sind überraschenderweise trotz der hohen Sterilisationstemperaturen von bis zu 160°C nahezu nicht geschädigt. Die Produkte brennen weder an, noch führt die FO-Werterhöhung, die zur sicheren Abtötung aller hitzeresistenten Sporenbildner zwingend notwendig ist, zu einer überproportionalen Produktschädigung. Auch bleibt die Verfärbung des Produktes in den gewünschten Grenzen.

Nach einer weiteren Lehre der Erfindung werden die zu sterilisierenden Produkte in einem Wärmetauscher zunächst auf Temperaturen bis zu max. 115 °C vorgeheizt und erst dann mit der Induktiverwärmung behandelt, bei der die Aufheizrate bevorzugt bis zu 80 K/s betragen kann. Die Kühlung des Produktes kann konventionell regenerativ erfolgen, nach einer weiteren Lehre der Erfindung erfolgt die Abkühlung auf die gewünschte Abfüllqualität bzw. - Viskosität jedoch mittels Injektion eines sterilen Kühlmediums.

Bei der induktiven Erhitzung kann gemäß einer weiteren Ausgestaltung der Erfindung der Produktstrom in mehrere Teilströme aufgeteilt werden.

Bevorzugt eignet sich das erfindungsgemäße Verfahren zur Sterilisation von Produkten, die auch stückige Anteile enthalten können mit Mindestleitfähigkeiten von 0,05 S/m. Der Wirkungsgrad steigt jedoch mit der Leitfähigkeit an. Bei einer Leitfähigkeit von 0,2 S/m werden bereits Induktionswirkungsgrade von über 50 % erreicht.

Ein weiterer Vorteil liegt in dem geringen Anlagevolumen des induktiven Erwärmungsbereiches, daß bei Sterilisationsanlagen mit einer Leistung von 10.000 l/h nicht mehr als 150 l betragen muß. Ein entsprechend geringerer Produktionsverlust bei Produktwechsel oder Reinigungvorgängen ist die Folge. Bevorzugt ist das Anlagenvolumen kleiner als 50 l.

Das erfindungsgemäße Verfahren führt zum Vorteil einer geringen Produktschädigung, weil kein Temperaturgradient zwischen Aufheizmedium und Produkt vorhanden ist. Daher ist das erfindungsgemäße Verfahren besonders zur Sterilisation empfindlicher Produkte wie beispielsweise von Milchprodukten oder für höherviskose Produkte und stückhaltige Produkte geeignet. Durch die zuverlässige Vermeidung des Anbrennens kann auf eine sonst notwendige Zwischenreinigung verzichtet werden, so daß die Auslastung der nach dem erfindungsgemäßen Verfahren arbeitenden Vorrichtungen ohne Zeitverlust möglich ist.

## Patentansprüche

1. Verfahren zur kontinuierlichen Sterilisation eines fließfähigen Produktes mit oder ohne stückigen Anteilen, insbesondere Milchproduktes, **gekennzeichnet durch** die folgenden Schritte:
- induktive Erwärmung (Sterilisation) auf eine Sterilisationstemperatur von 121°C ≤ T_{S} ≤ 160°C und
- indirekte Abkühlung auf Verarbeitungs- bzw. Abfülltemperatur.

2. Verfahren nach Anspruch 1,
**dadurch gekennzeichnet**, daß die induktive Aufheizrate bis zu 80 K/s beträgt.

3. Verfahren nach Anspruch 1 oder 2,
**dadurch gekennzeichnet**, daß vor der induktiven Erwärmung eine indirekte Erwärmung (Vorwärmung) bis zu einer Vorwärmtemperatur von 70 °C ≤ T_{P} ≤ 115°C erfolgt.

4. Verfahren nach Anspruch 3,
**dadurch gekennzeichnet**, daß die indirekte Erwärmung (Vorwärmung) einen Proteinstabilisierungsschritt aufweist.

5. Verfahren nach Anspruch 3 oder 4,
**dadurch gekennzeichnet**, daß die indirekte Erwärmung (Vorwärmung) einen Homogenisierungsschritt aufweist.

6. Verfahren nach einem der Ansprüche 1 bis 5,
**dadurch gekennzeichnet**, daß die Abkühlung mittels Injektion eines sterilen Kühlmediums erfolgt.

7. Verfahren nach einem der Ansprüche 1 bis 6,
**dadurch gekennzeichnet**, daß das Produkt zur induktiven Erwärmung in wenigstens zwei gleiche Teilströme aufgeteilt wird.

8. Vorrichtung zur Durchführung eines Verfahrens nach einem der Ansprüche 1 bis 7,
**dadurch gekennzeichnet**, daß bei einer Leistung von 10.000 l/h das Anlagevolumen des induktiven Erwärmungsbereiches 15 bis 150 l beträgt.

9. Vorrichtung nach Anspruch 8,
**dadurch gekennzeichnet**, daß bei einer Leistung von 10.000 l/h das Anlagevolumen des induktiven Erwärmungsbereiches kleiner als 50 l ist.

10. Verwendung des Verfahrens zur kontinuierlichen Sterilisation eines fließfähigen Produktes nach einem der Ansprüche 1 bis 7 zur Sterilisation eines Produktes mit einer Mindestleitfähigkeit von 0,05 S/m.
